# EUROPÄISCHE PATENTANMELDUNG

(11) **EP 0 842 810 A1**
(43) Veröffentlichungstag der Anmeldung: **20.05.1998**
(21) Anmeldenummer: 96118323.3
(22) Anmeldetag: 15.11.1996
(51) Int. Cl.: B60N 2/24, B60H 1/00

(54) **Personenbeförderungsfahrzeug mit Betriebskanal**

(71) Anmelder: Vogel Industrie GmbH, 76228 Karlsruhe (DE)
(72) Erfinder: Vogel, Heiner, 76228 Karlsruhe (DE); Weiler, Klaus, 76228 Karlsruhe (DE)
(74) Vertreter: Trappenberg, Hans

(57) **Zusammenfassung**

In einen Personenbeförderungsfahrzeug mit wenigstens einer Wand 1 sind Fahrgastsitze mittels einer Vorrichtung befestigbar. Die Vorrichtung ist an einem oberen Befestigungspunkt 2 und einem in einem Abstand zum oberen Befestigungspunkt 2 angeordneten unteren Befestigungspunkt 3 mit der Fahrzeugwand 1 verbunden. An der Wand 1 ist zwischen den Befestigungspunkten 2, 3 ein Betriebskanal 4 vorgesehen. Der Betriebskanal 4 erstreckt sich durch das Fahrzeug und enthält Leitungen zur Versorgung des Fahrzeuginnenraumes mit Wärme, elektrischer Energie und/oder Signalen.

## Beschreibung

Die Erfindung betrifft ein Personenbeförderungsfahrzeug mit wenigstens einer Wand, an der Fahrgastsitze mittels einer Vorrichtung befestigbar sind, wobei die Vorrichtung an einem oberen Befestigungspunkt und an einem in einem Abstand zum oberen Befestigungspunkt angeordneten unteren Befestigungspunkt mit der Fahrzeugwand verbunden ist.

Ein derartiges Fahrzeug ist aus der EP 0627338 A 1 bekannt. Da der Druckschrift nähere Angaben über die Art der Beiheizung des Fahrzeuginnenraumes beziehungsweise der Versorgung des Fahrzeugsinnenraumes mit elektrischer Energie oder mit Signaleinrichtungen nicht entnommen werden können, muß davon ausgegangen werden, daß die Versorgung des Fahrzeuginnenraumes mit den genannten Ausstattungen auf herkömmliche Art und Weise vorgenommen wird. Das heißt, zur Heizung des Fahrzeuginnenraumes werden auf dem Boden oder an der Seitenwand des Fahrzeuges befestigte Konvektoren mittels Rohrleitungen mit erhitztem Wasser versorgt. Die elektrischen Leitungen wie beispielsweise Energieversorgungsleitungen oder Signalleitungen werden individuell im Fahrzeug verlegt. Vorzugsweise wird zur Verlegung der Leitungen der Raum hinter der Fahrzeuginnenverkleidung gewählt.

Die individuelle Verlegung der Versorgungsleitungen ist recht aufwendig, da nur in geringem Umfange auf Standardelemente zurückgegriffen werden kann. Darüber hinaus läßt sich eine einmal vorgenommene Ausstattung des Fahrzeuginnenraumes nur mit sehr großem Aufwand verändern. So ist es beispielsweise nur sehr schwer möglich zusätzliche Heizkörper in den Fahrzeuginnenraum einzufügen oder Heizkörper aus dem Fahrzeuginnenraum zu entfernen. Desweiteren ist es nur sehr schwer möglich nachträglich Signalleitungen zu bestimmten Punkten im Fahrzeug hinzuführen, da die Leitungen in der Regel vom Ursprungsort aus neu verlegt werden müssen.

Es ist Aufgabe der Erfindung ein eingangs genanntes Personenbeförderungsfahrzeug so auszubilden, daß die Versorgung des Fahrzeugs mit Betriebsmitteln wie beispielsweise Heizung oder elektrischer Energie auf einfache Art und Weise erfolgt und die Ausstattung leicht verändert werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist an der Wand zwischen den Befestigungspunkten der die Fahrgastsitze tragenden Vorrichtung ein Betriebskanal vorgesehen, welcher sich durch das Fahrzeug erstreckt und Leitungen zur Versorgung des Fahrzeuginnenraumes mit Wärme, elektrischer Energie und/oder Signalen enthält. In vorteilhafter Weise ist der Betriebskanal als Profilschiene ausgebildet, welche voneinander getrennte Leitungen aufweist, durch die erhitztes Wasser geführt wird. Die Leitungen für die elektrische Energie oder die Signalleitungen können in weiteren Kanälen der Profilschiene geführt werden.

Durch die erfindungsgemäße Ausbildung eines Personenbeförderungsfahrzeuges läßt sich auf sehr einfache Weise auf die durch das erhitzte Wasser transportierte Wärme zugreifen. Will man an einer Stelle eine große Wärmeabgabe erreichen, können auf dem Betriebskanal Lamellen aufgebracht werden, welche die wirksame Oberfläche des Betriebskanals vergrößern. In vorteilhafter Weise sind die Lamellen jeweils zu Elementen bestimmter Länge zusammengefaßt und die Elemente lösbar mit dem Betriebskanal verbunden. Hierdurch läßt sich auf einfache Weise die Heizleistung einstellen. An der Stelle, an der eine große Wärmeabgabe erwünscht ist, wird ein aus einer Vielzahl von Lamellen bestehendes Element auf dem Betriebskanal aufgebracht. Statt an bestimmten Stellen Konvektoren fest zu installieren können nun Lamellenelemente variabel auf dem Betriebskanal aufgebracht werden. In vorteilhafter Weise sind die Elemente mit einem Schnappverschluß versehen, der in entsprechende Ausnehmungen des Betriebskanals eingreift.

Als besonders vorteilhaft hat sich herausgestellt, daß die den Betriebskanal enthaltende Profilschiene ebenfalls Vorrichtungen aufweist, an die die Fahrgastsitze tragende Vorrichtung befestigbar ist. Als besonders vorteilhaft hatte sich dabei eine Befestigungsvorrichtung herausgestellt, wie sie in der gleichzeitig eingereichten, nicht vorveröffentlichten Patentanmeldung der Anmelderin mit dem Titel "Vorrichtung zur Befestigung eines Fahrgastsitzes" beschrieben ist. Wegen der besonderen Bedeutung der an der genannten Patentanmeldung beschriebenen Vorrichtung für die vorliedende Erfindung wird deren Inhalt vollständig in die vorliegende Erfindung miteinbezogen.

Eine weitere vorteilhafte Ausgestaltung der Erfindung sieht vor, daß der Betriebskanal eine von außen frei zugängliche Stromschiene aufweist, auf die Stromabnehmer lösbar befestigbar sind. Hierdurch ist es auf einfache Art und Weise möglich, an beliebigen Stellen im Fahrzeuginnenraum auf elektrische Energie zugreifen zu können. Statt zur Stromversorgung von elektrischen Geräten könnte die Stromschiene auch zur Versorgung von Geräten mit elektrischen Signalen dienen.

Als besonders vorteilhaft hat sich auch eine Ausführungsform der Erfindung herausgestellt, bei der Betriebskanal im Abstand voneinander angeordnete Anschlüsse aufweist, mittels der auf die Versorgungsleitungen zugegriffen werden kann. Sind die Anschlüsse als selbst betätigbare Schnellverschlüsse ausgebildet, kann der Zugriff auf die Versorgungsleitungen ohne großen Aufwand erfolgen. Mittels der Anschlüsse kann beispielsweise auf die das erhitzte Wasser enthaltende Versorgungsleitungen zugegriffen werden. Es kann aber auch auf diese Art und Weise elektrische Energie abgegriffen werden oder eine Verbindung mit Audio- oder Videosignalleitungen erfolgen. In den letztgenannten Fällen können die Anschlüsse als mehrpoliger Stecker oder Koachs-Stecker ausgebildet sein.

Bei den zuletzten genannten Ausführungsformen der Erfindung ist es besonders vorteilhaft, wenn die Befestigungsvorrichtung, auf welcher sich die Fahrgastsitze befinden, Anschlüsse aufweist, welche mit den Anschlüssen des Betriebskanals korrespondieren. Hierdurch ist es möglich, den Sitz bei der Herstellung mit Leitungen zu versehen, welche beispielsweise zu einer im Sitz angeordneten elektrischen- oder Warmwasserheizung führen, oder zu Geräten, welche Audio- oder Videosignale in Töne oder Bilder umsetzen. Auch können im Sitz Signalgeber oder -melder angeordnet sein, welche mittels separater Signalleitungen, welche ebenfalls über Anschlüsse mit im Betriebskanal befindlichen Signalleitungen verbunden werden.

Weitere Vorteile und Merkmale der vorliegenden Erfindung ergeben sich aus der nachfolgenden Beschreibung eines besonderen Ausführungsbeispiels unter Bezugnahme auf die Zeichnung.

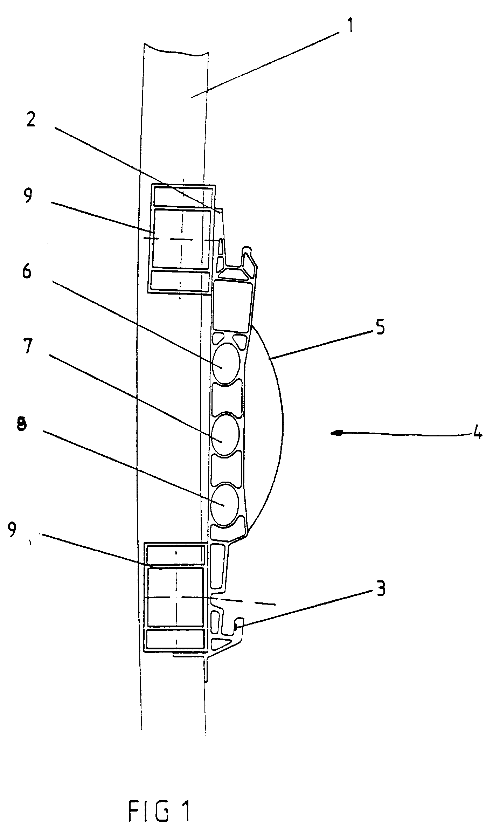

Es zeigt
Figur 1 eine chemische Darstellung eines an einer Fahrzeugwand angebrachte erfindungsgemäßen Betriebskanals im Schnitt und
Figur 2 eine schematische Darstellung eines erfindungsgemäßen Betriebskanals in der Vorderansicht.

Eine Seitenwand 1 eines Personenbeförderungsfahrzeuges weist zwei im Abstand zueinander angebrachte Fahrzeugquerträger 9 auf, an die ein als Strangpreßprofil ausgebildeter Betriebskanals 4 befestigt ist. Das Strangpreßprofil weist Vorrichtungen 2, 3 zur Aufnahme einer Fahrgastsitze tragenden Vorrichtung auf. Die Vorrichtungen 2, 3 sind so ausgebildet, daß die die Fahrgastsitze tragende Vorrichtung auf einfache Weise in die Vorrichtungen 2, 3 eingehängt werden kann. Zwischen den beiden Vorrichtungen 2, 3 ist der Betriebskanal 4 angeordnet. Der Betriebskanal 4 besteht aus dem Teil des Stranpreßprofils, welcher sich zwischen den beiden Befestigungsvorrichtungen 2, 3 befindet. Da die Befestigungsvorrichtungen 2, 3 und der Betriebskanal 4 als ein Strangpreßprofil gefertigt sind, lassen sich diese Elemente auf sehr wirtschaftliche Weise herstellen und im Fahrzeug montieren.
Der Betriebskanal 4 weist Leitungen 6, 7, 8 auf, durch welche erhiztes Wasser fließt. Statt Wasser kann jedoch auch ein erhitztes Gas genommen werden wie beispielsweise erhitzte Luft, wenn dies zweckdienlich sein sollte. Die Versorgungsleitung 8 kann als Zuflußleitung dienen und die Versorgungsleitung 6 als Rückflußleitung. Die Versorgungsleitung 7 kann als zusätzliche Versorgungsleitung in Reserve gehalten werden. Auf dem Betriebskanal 4 sind Heizlamellen 5 angebracht. Die Heizlamellen 5 sind in Gruppen zu Elementen 10 zusammengefaßt. Die Elemente 10 können mittels eines Klemmverschlusses auf den Betriebskanal 4 auffgebracht werden.

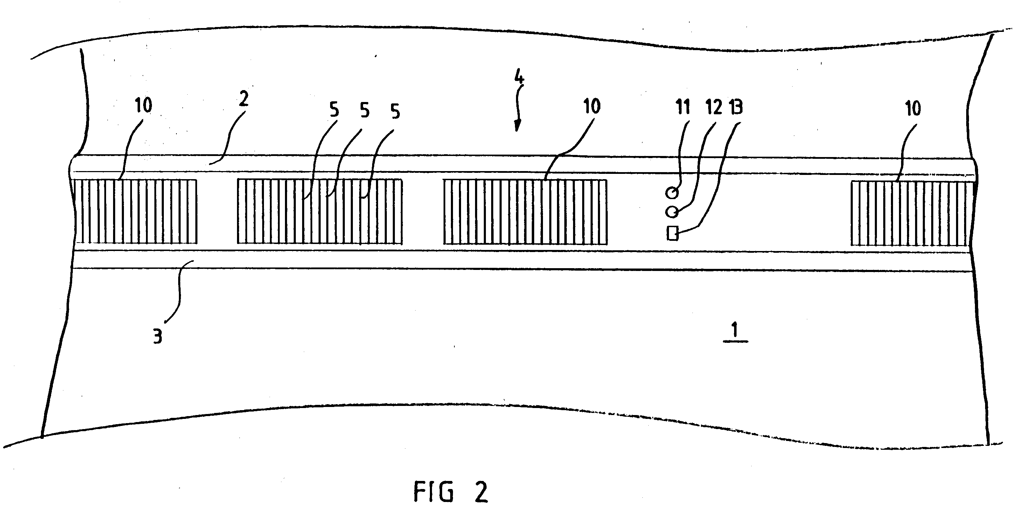

Wie der Figur 2 entnommen werden kann, weist der Betriebskanal 4 im Abstand voneinander angeordnete Anschlüsse 11, 12, 13 auf, mittels der auf die Versorungsleitungen zugegriffen werden kann. Derartige Anschlüsse befinden sich hinter jedem Element 10. In der Figur 2 sind jedoch der Übersichtlichkeit halber nur die Anschlüsse dargestellt, welche durch ein abgenommenes Element 10 nicht verdeckt sind. Der Anschluß 11 ist mit der Versorgungsleitung für den Rückfluß verbunden, der Anschluß 12 mit der Versorgungsleitung für den Zufluß. Der Anschluß 13 ist als Stecker ausgebildet und greift auf Stromversorgungsleitungen sowie auf Signalleitungen zu. Die Vorrichtung, auf der die Fahrgastsitze angeordnet sind, weist an korrespondierenden Stellen Anschlüsse auf, welche die Gegenstücke zu den imBetriebskanal 4 angeordneten Anschlüssen 11, 12, 13 darstellen. Die Anschlüsse sind als selbstbetätigbare Schnellverschlüsse ausgebildet. Wird die Vorrichtung, welche die Fahrgastsitze trägt, in die als Nuten ausgebildete Befestigungspunkte eingehängt, wird gleichzeitig ohne weiteres Dazutun eine Verbindung der in der die Fahrgastsitze tragenden Vorrichtung enthaltenen Anschlüsse mit den Anschlüsse 11, 12, 13 des Betriebskanals 4 hergestellt. Innerhalb der die Fahrgastsitze tragenden Vorrichtung sind die Anschlüsse über entsprechende Leitungen mit Endgeräten wie beispielsweise Warmwasserheizung, elektrische Zusatzheizung, Motoren zum Verstellen der Sitze, Audio- oder Videogeräte verbunden. Durch das erfindungsgemäß ausgestattete Strangpreßprofil läßt sich auf einfache Art und Weise die Versorgung des Fahrzeuginnenraumes mit Wärme und/oder elektrischer Energie herstellen. Spätere Änderungen sind durch die systematische Anordnung der Elemente unproblematisch.

## Patentansprüche

1. Personenbeförderungsfahrzeug mit wenigstens einer Wand (1), an der Fahrgastsitze mittels einer Vorrichtung befestigbar sind, wobei die Vorrichtung an einem oberen Befestigungspunkt (2) und einem in einem Abstand zum oberen Befestigungspunkt (2) angeordneten unteren Befestigungspunkt (3) mit der Fahrzeugwand (1) verbunden ist,
dadurch gekennzeichnet,
daß an der Wand (1) zwischen den Befestigungspunkten (2, 3) ein Betriebskanal (4) vorgesehen ist, welcher sich durch das Fahrzeug erstreckt und Leitungen zur Versorgung des Fahrzeuginnenraumes mit Wärme, elektrischer Energie und/oder Signalen enthält.

2. Personenbeförderungsfahrzeug nach Anspruch 1,
dadurch gekennzeichnet,
daß der Betriebskanal (4) als Profilschiene ausgebildet ist, welche voneinander getrennte Leitungen (6, 7, 8)aufweist, durch die erhitztes Wasser geführt wird.

3. Personenbeförderungsfahrzeug nach Anspruch 1 oder 2,
dadurch gekennzeichnet,
daß der Betriebskanal (4) an seiner Oberfläche Lamellen (5) aufweist, mittels der die wirksame Oberfläche des Betriebskanals (4) vergrößert wird.

4. Personenbeförderungsfahrzeug nach Anspruch 3,
dadurch gekennzeichnet,
daß die Lamellen (5) jeweils zu Elementen (10) bestimmter Länge zusammengefaßt sind und die Elemente (10) lösbar mit dem Kanal (4) verbunden sind.

5. Personenbeförderungsfahrzeug nach einem der Ansprüche 1 bis 4,
dadurch gekennzeichnet,
daß der Betriebskanal (4) eine von außen frei zugängliche Stromschiene aufweist, auf die Stromabnehmer lösbar befestigbar sind.

6. Personenbeförderungsfahrzeug nach einem der Ansprüche 1 bis 5,
dadurch gekennzeichnet,
daß der Betriebskanal (4) im Abstand voneinander angeordnete Anschlüsse (11, 12, 13) aufweist, mittels der auf die Versorgungsleitungen zugegriffen werden kann.

7. Personenbeförderungsfahrzeug nach Anspruch 6,
dadurch gekennzeichnet,
daß die Anschlüsse (11, 12, 13) als selbstbetätigbare Schnellverschlüsse ausgebildet sind.

8. Personenbeförderungsfahrzeug nach Anspruch 6 oder 7,
dadurch gekennzeichnet,
daß die Befestigungsvorrichtung Anschlüsse aufweist, welche mit den Anschlüssen (11,12, 13) des Betriebskanals (4) korrespondieren.
